**Europäisches Patentamt**

**European Patent Office**

**Office européen des brevets**

(19)

(11) Veröffentlichungsnummer: **0 160 010**
**B1**

(12)

# EUROPÄISCHE PATENTSCHRIFT

(45) Veröffentlichungstag der Patentschrift:
**16.12.87**

(51) Int. Cl.⁴: **B 60 H 3/06,** B 01 D 53/00

(21) Anmeldenummer: **84903546.4**

(22) Anmeldetag: **18.09.84**

(86) Internationale Anmeldenummer:
**PCT/EP 84/00286**

(87) Internationale Veröffentlichungsnummer:
**WO 85/01704 (25.04.85 Gazette 85/10)**

(54) **VORRICHTUNG ZUR REINIGUNG VON MIT SCHADSTOFFEN BELASTETER LUFT.**

(30) Priorität: **11.10.83 DE 3336903**
**10.11.83 DE 3340667**
**29.11.83 DE 3343128**
**24.02.84 DE 3406709**
**20.06.84 DE 3422778**
**28.06.84 DE 3423848**
**25.06.84 DE 3431373**
**25.06.84 DE 3431372**

(43) Veröffentlichungstag der Anmeldung:
**06.11.85 Patentblatt 85/45**

(45) Bekanntmachung des Hinweises auf die Patenterteilung:
**16.12.87 Patentblatt 87/51**

(84) Benannte Vertragsstaaten:
**AT BE CH DE FR GB LI LU NL SE**

(56) Entgegenhaltungen:
**EP-A-0 042 287**
**WO-A-81/01963**
**WO-A-82/01348**
**DE-A-2 224 172**
**DE-A-2 338 601**
**DE-A-2 416 805**
**DE-A-2 911 428**
**FR-A-2 522 791**

(73) Patentinhaber: **Hölter, Heinz, Dipl.- Ing.,**
**Beisenstrasse 39- 41, D-4390 Gladbeck (DE)**

(72) Erfinder: **IGELBÜSCHER, Heinrich, Marcq- en-**
**Baroeul- Strasse 60, D-4390 Gladbeck (DE)**
Erfinder: **GRESCH, Heinrich, Franz- Lehàr- Strasse**
**25, D-4600 Dortmund- Wickede (DE)**
Erfinder: **DEWERT, Heribert, Bahnhofstrasse 23,**
**D-4390 Gladbeck (DE)**
Erfinder: **HÖLTER, Heinz, Beisenstrasse 39- 41,**
**D-4390 Gladbeck (DE)**

(74) Vertreter: **Spalthoff, Adolf, Dipl.- Ing.,**
**Pelmanstrasse 31 P.O. Box 34 02 20, D-4300**
**Essen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine ein- und ausschaltbare Filteranlage zur Reinigung von mit Schadstoffen belasteter Luft, welche zum Aufenthalt von Personen dienenden Kraftfahrzeugkabinen zugeführt wird, unter Verwendung eines Chemisorptionsfilters und diesem in Strömungsrichtung der Luft nachgeordneten Katalysatormassen, wobei die zu reinigende Luft vor Eintritt in den Chemisorptionsfilter eine Teilerwärmung und vor Eintritt in die Katalysatormassen eine weitere Erwärmung erfährt, im Anschluß daran rückgekühlt und den Kabinen zugeführt wird. Eine derartige Filteranlage ist aus der WO-A-81/01963 bekannt.

In neuerer Zeit wird vielfach versucht, die Schadstoffe in der Luft durch Filteranlagen abzusaugen, um dann die Luft dem Fahrzeugführer oder der Fahrerkabine gereinigt zuzuführen.

Das Ein- und Ausschalten der Filteranlage wird bisher in der Regel über die Riechbarkeit von Kohlenwasserstoffen gesteuert.

Vielfach wurde versucht, durch Meßgeräte das Ein- und Ausschalten je nach Schadstoffbelastung zu steuern.

Das Einbringen von Meßeinrichtungen mit gleichzeitiger Auswertung ist sehr aufwendig und aus wirtschaftlichen Überlegungen kaum durchführbar.

Andererseits lassen sich Sensoren, die jeweils einen bestimmten Sensibilitätsgrad für eine bestimmte Schadstoffkomponente aufweisen, als Meßanzeige verwenden.

Jedoch ist das Ansetzen von Meßgeräten oder Sensoren, um eine verläßliche Anzeige zu erhalten, sehr sehr schwierig.

Würde man eine Meß-Steuerung im Fahrzeuginneren anbringen und damit erzielen, daß die angesaugte Luft immer dann gefiltert wird, wenn die Meßanzeige im Fahrzeuginneren Schadstoffe aufweist, so würde die Luft, die zum Fahrzeuginneren über den Filter geschickt wird, in Kürze einen positiven Wert bezüglich Reinheitsgrad aufweisen, und der Filter würde ausgeschaltet. Wenn die Luft jedoch draußen mit Schadstoffen belastet ist, so würde nach einer Zeit von z. B. ein bis zwei Minuten wieder das Meßgerät anspringen und eine Belastung zeigen. Das hieße, es müßte ein laufendes Ein- und Ausschalten durchgeführt werden mit jeweiligen Verzögerungstakten, ohne daß dabei die Gewähr gegeben ist, daß eine kontinuierliche Luftzufuhr immer dann gewährleistet ist, wenn im Bereich außerhalb des Fahrzeuges Schadstoffe belastend wirken können. Aus diesem Grunde hat man die Meßeinrichtungen nach außerhalb des Fahrzeuges verlegt. Bei dieser Ausführung treten erhebliche Schwierigkeiten auf, z. B. bei Nebelwetter, oder Frost und anschließendem Sonnenschein, oder Regengüssen, d.h., die Meß-Sonde oder der Sensor wird durch sehr viele querempfindlich wirkende Umwelteinflüsse an einer genauen Anzeige gehindert.

Das Anbringen von Meßeinrichtungen mit Vortrocknen durch Gelfilter als Beispiel, das ansetzen der Meßapparatur im Ansaugluftschacht für das Zuführen der Luft im Klimaschacht oder im normalen Frischluftschacht unterliegt dem stetigen, relativen Luftfeuchtewechsel und dem stetigen Temperaturwechsel, wobei zusätzlich beim Stehen des Fahrzeuges in einer Kolnnne vielfach bei PKW-Fahrzeugen und auch LKW-Fahrzeugen Ausgasungen aus dem Motorbereich entstehen, die einerseits eine Schadstoffbelastung anzeigen, die nicht ais Leitgröße für z. B. einen CO oder HC-Sensor üblich ist, aber andererseits durch die Querempfindlichkeit aller Meßeinrichtungen eine Verfälschung des Bildes bewirkt wird.

Erfindungsgemäß wird daher für eine Filteranlage der eningangs genannten Art vorgeschlagen, daß ein Meßglied zum Messen von Schadstoffen in der den Kabinen zugeführten Luft vorgesehen ist, welches vom Luftstrom hinter dem Kühler des Kraftfahrzeuges beaufschlagt ist.

Es wurde gefunden, daß der neutralste Platz für die Anzeige eines Meßgliedes unmittelbar hinter dem Wasserkühler ist, und zwar im Bereich des bespülten Raumes, in dem der Ventilator auch im Stehen des Fahrzeuges bei entsprechender Lufttemperaturüberhöhung Luft durch den Wärmetauscher des Wasserkühlers durchsaugt und das Meßglied - egal in welcher Ausführung - bespült wird, und zwar mit fast einer konstanten Lufttemperatur - denn es ist ja bekannt, daß die Wasserkühler in der Regel um 90 Grad C arbeiten, so daß die Luft, die dem Meßglied zugeführt wird, nicht nur von Mücken, Fliegen und sonstigem Ungeziefer gereinigt wird, was beim Ansetzen einer Meßapparatur im Luftstrom immer eine Gefahr bedeutet, sondern auch Grobstaub ferngehalten wird, und die Luft im Sommer wie im Winter mit etwa gieichbleibender Temperatur dem Meßglied zugeführt wird.

Vorteilhaft ist das Meßglied so angesetzt, daß es mit einer tangierenden Luftströmung beaufschlagt wird; das bedeutet, daß Feinststaubpartikel sich nicht in das Meßglied einlagern, sondern tangierend mit der Luftströmung vorbeigeführt werden und keine Meßwertfälschung verursachen.

Es ist bekannt, daß über schadstoffmessende Sensoren und über akustische und/oder optische Signale dem Fahrer des Fahrzeuges angezeigt wird, daß Schadstoff vorhanden ist. Mit dem Sensor ist ein Chemisorptionsfiiter gekoppelt, der garantiert, daß die angesaugten schadstoffbeladenen Luftmengen, die zur Belüftung in den Fahrgastraum über den Ventilator hineingesaugt oder gedrückt werden, gereinigt werden.

Jedoch gibt es zur Zeit keine Technik, die garantiert, daß erkennbar ist, wann der Chemisorptionsfilter gefüllt ist und evtl. eine schadgasbeladene Desorption die Fahrgäste benachteiligt.

Nach einem weiteren Merkmal einer Ausführungsform der Erfindung wird vorgeschlagen, daß der Chemisorptionsfilter durch Sensoren gesteuert wird, wobei als erster Sensor das Meßglied zum Messen von Schadstoffen in der den Kabinen zugeführten Luft verwendet wird und ein zweiter Sensor in Strömungsrichtung hinter dem Chemisorptionsfilter angeordnet ist und an eine Zentralanzeige im Bereich des Fahrzeugführers angeschlossen ist. Auf diese Weise wird dem Fahrzeugführer angezeigt, wenn der Filter verbraucht ist, d.h. eine Desorption stattfindet.

Es ist bekannt, daß im Stadtbereich im Innenraum von Kraftfahrzeugen erhebliche Schadstoffanreicherungen vorkommen können. Weiterhin ist bekannt, daß im Kraftfahrzeug bei kleinen Fahrtgeschwindigkeiten zur Unterstützung der Luftbewegung im PKW häufig der Ventilator eingeschaltet ist. Hierdurch werden im stop and go Verkehr besonders im Stand häufig erhebliche Schadstoffmengen in den Innenraum gedrückt, ohne Rücksicht auf die momentane Außenluft.

Um diese Nachteile zu vermeiden wird vorgeschlagen, daß das Meßglied einen Kraftfahrzeugventilator selbsttätig entsprechend den auftretenden Schadstoffbelastungen aus- bzw. einschaltet. Somit wird die Schadstoffbelastung im Kraftfahrzeuginnenraum gemindert und damit auch die gesundheitliche Beeinträchtigung der Fahrzeuginsassen.

Es ist bekannt, Belüftungssysteme über sensorerregte Steuerorgane zu schließen oder zu öffnen. Als Sensoren finden heute üblicherweise Halbleitersensoren Anwendung. Die schmalen Arbeitsbereiche der Sensoren liegen nicht im Bereich der im Straßenverkehr auftretenden Schadstoffkonzentrationen, sondern diese liegen normalerweise in einem Bereich in einer Größenordnung darüber. So liegt beispielsweise die Ansprechempfindlichkeit der üblichen Zinndioxyd-Sensoren für CO bei 50 ppm, während sie im Straßenverkehr von 1 ppm bei CO zu erfassen sind. Andere Schadstoffe treten mit entsprechend niedriger Konzentration auf. Zur Verwirklichung des der Erfindung zugrundeliegenden Leitgedankens, Schadstoffkonzentrationen im Straßenverkehr durch Halbleitersensoren sicher zu erfassen, wird nach einem weiteren Merkmal einer Ausfürungsform der Erfindung vorgeschlagen, daß als Meßglied ein Halbleitersensor vorgesehen ist und eine elektrische Stabilisierung für Schadstoffkonzentrationen bis in den Bereich von unter 1 ppm Schadstoffbelastung durchgeführt wird. In diesem niedrigen Konzentrationsbereich weisen die Sensoren kein lineares Verhalten mehr auf, sondern steigen gegen sehr hohe Widerstandswerte an, so daß keine ausreichende stabile Steuerung gewährleistet ist und ein wechselhaftes Steuern in diesem exponentiellen Bereich auftreten kann.

Sensoren haben eine temperaturabhängige Anzeigeempfindlichkeit. Sie sind am Einbauort, insbesondere als Schadstoffsensor im Automobil, zur Erfassung der Luftbelastung hohen Temperaturschwankungen ausgesetzt, die wetterbedingt sind und aber auch von den Strömungsverhältnissen abhängen. Gleichzeitig tritt die Wärmeentwicklung der eigenen Sensoraufheizung auf. Eine konstante Anzeige ist nur dann zu erwarten, wenn das Sensorelement unter all diesen vorstehend angeführten Einflüssen eine konstante Temperatur aufweist. Die üblichen Maßnahmen zur Temperaturkompensation innerhalb einer Sensorsteuerung führen nicht zum Erfolg, da an dieser Stelle die Einflüsse unmittelbar am Sensorhalbleiter nicht erfaßt werden.

Gemäß einem weiteren Merkmal einer Ausfürungsform der Erfindung wird daher vorgeschlagen, daß zur Konstanthaltung des Temperaturfeldes, in dem das Meßglied arbeitet, die erforderliche Temperaturerfassung unmittelbar am Meßglied erfolgt, so daß sowohl die Temperatur am Sensor als auch die durch Konvektion an dieser Stelle erhöhte Wärmeabfuhr erfaßt werden können.

Vorteilhaft wird das Meßglied durch Regelung der Heizleistung über die Sensorheizspannung auf konstante Beheizungstemperatur gehalten. Hierdurch wird weiterhin erreicht, daß die durch die Sensorheizung herbeigeführte Dekontaminierung ständig bei konstanter Temperatur erfolgt, d.h. auch die Ansprechgeschwindigkeit des Sensors bleibt konstant.

Es ist bereits vorgeschlagen worden, zur Schaltung von Frischluftströmen für Autofahrerkabinen bzw. Arbeitsschutzkabinen einen Sensor zu verwenden, der bei Schadstoffbelastungen den Frischluftventilator steuert, so daß Umluftbetrieb in der Fahrzeugkabine nur gewährleistet ist, wenn saubere Außenluft den Sensor positiv beeinflußt, d.h. der Sensor den Ventilator einschaltet. In weiterer Ausgestaltung wird nunmehr vorgeschlagen, daß das Meßglied einen Vorgang - akustisch bzw. optisch und/oder direkt schalttechnisch - auslöst, der es ermöglicht, daß Fensterheber, Schiebedach und Luftklappen geschlossen werden.

Ausführungsbeispiele der Erfindung sind an Hand der Zeichnung näher erläutert, und zwar zeigt:.

Figur 1 eine teilweise geschnittene Draufsicht des vorderen Teils eines Kraftfahrzeuges,

Figur 2 eine perspektivische Rückansicht eines Kraftfahrzeuges,

Figur 3 eine Ansicht einer Zentralanzeige,

Figur 4 eine perspektivische Darstellung eines Kraftfahrzeuges mit sichtbar gemachter Leistungsführung,

Figur 5 eine Steuerschaltung zur Vermeidung von Schadstoffspitzen,

Figur 6 eine Schaltung zur Auslösung eines kurzzeitigen Aufheizstoßes,

Figur 7 eine Schaltung für eine temperaturabhängige Sensorregelung und

Figur 8 eine geschnittene Ansicht eines Gehäuses mit der Schaltung nach Figur 7.

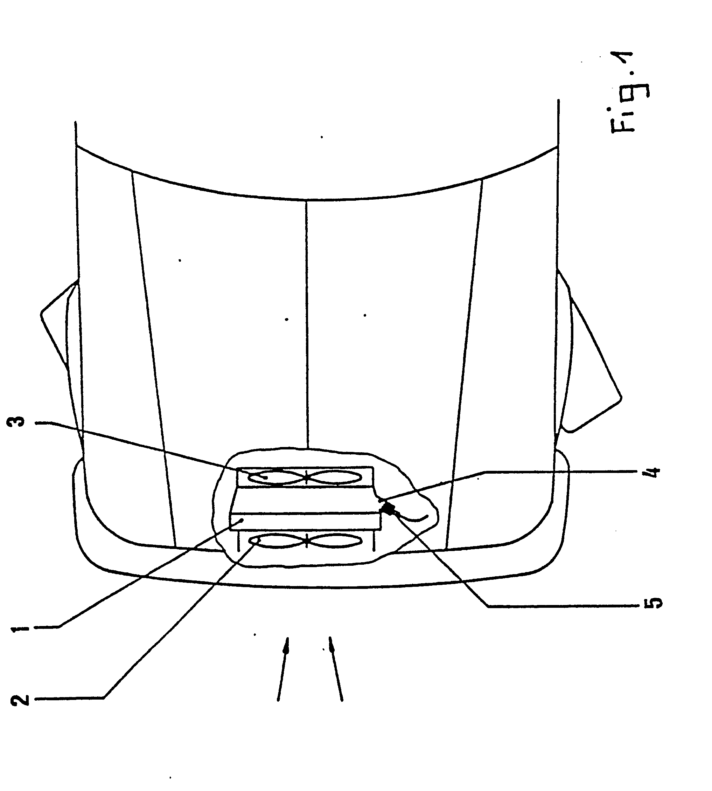

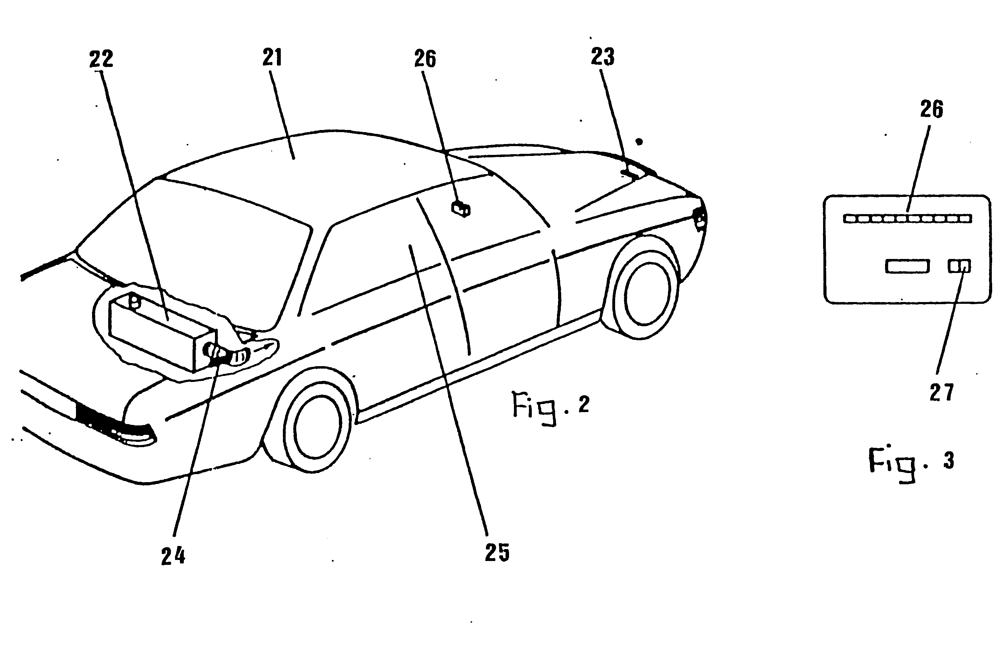

Bei der Ausführung nach Figur 1 ist mit 1 der Wasserkühler, mit 2 ein vor dem Wasserkühler 1 angeordneter Ventilator, mit 3 ein wahlweise hinter dem Kühler 1 angeordneter Ventilator, mit 4 eine hinter dem Kühler in Anströmrichtung angesetzte Lufthaube und mit 5 das Meßglied, z. B. ein Sensor, bezeichnet, der schräg in der Luftanströmhaube angesetzt ist, so daß die Luft tangierend das Meßglied 5 bespült und evtl. mitdurchgerissene Feinststaubteile vom Meßglied weggebracht werden.

Die Figuren 2 und 3 zeigen die Ausführung zum Einschalten und Überwachen von Chemisorptionsfiltern.

In Figur 2 ist mit 21 das Auto, mit 22 der Chemisorptionsfilter, mit 23 ein erster Sensor unter der Motorhaube, mit 24 ein zweiter Sensor im Bereich des Ausblasstutzens des Chemisorptionsfilters 22, vorzugsweise vor Eingang der gereinigten Luft in die Luftschläuche zur Kabine 25, und mit 25 die Kabine bezeichnet.

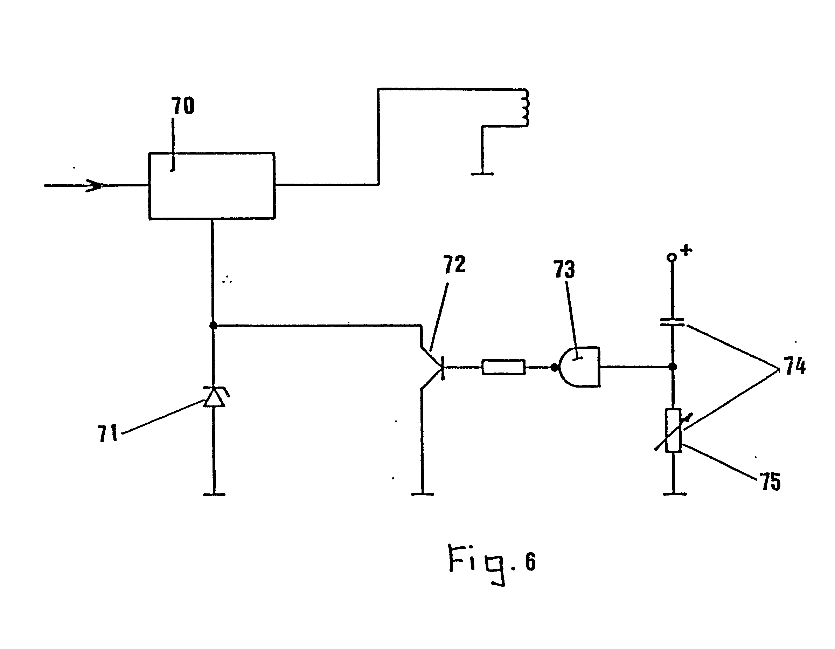

Wie aus Figur 6 ersichtlich, ist eine Zentralanzeige 26 für die Sensoren 23, 24 vorgesehen sowie eine Kippumschaltung 27 der Zentralanzeige 26, welche mit dem ersten und zweiten Sensor 22, 24 gekoppelt ist, so daß diese auf die Zentralanzeige umschaltbar sind.

Es ist bereits vorgeschlagen worden, daß ein Chemisorptionsfilter zur Reinigung der Atemluft für Fahrzeugkabinen so ausgelegt ist, daß bei auftretender Desorption aus der chemisorbierenden Filtermasse eine zusätzliche Schaltung auf den Ventilator erzeugt wird, indem die Luft aus der Kabine oder aus dem Fahrerraum entgegengesetzt der Desorption nach außen in die freie Atmosphäre getrieben wird.

In Weiterentwicklung dieses Gedankens wird erfindungsgemäß vorgeschlagen, daß der Ventilator in gleicher Richtung weiterarbeitet, jedoch durch Klappenschaltung hinter dem Filter die Luft nicht in den Fahrgastraum zurückgeführt wird, sondern in den Kofferraum oder ins Freie.

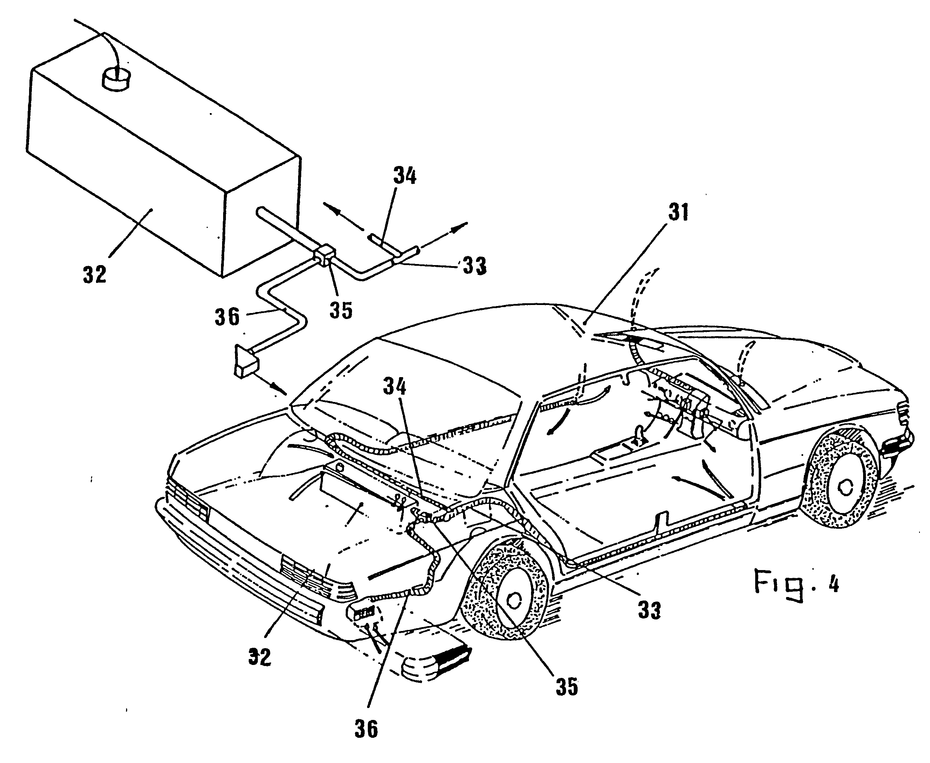

Wie aus Figur 4 hervorgeht, ist in dem Kraftfahrzeug 31 dem Chemisorptionsfilter 32 eine Desorptionsleitung 36 nachgeordnet, die entweder in den Kofferkasten oder nach außerhalb des PKW's geführt ist. Mit 33 und 34 sind die Luftzuführungen in die PKW-Kabine bezeichnet, während der Desorptionsanschlußstutzen das Bezugszeichen 35 trägt.

Die gesamte Schaltung kann über Sensoren, die über den Schadstoffgehalt eine Anzeige weiterleiten und die entsprechenden Ab- und Zuschieberungen der Leitungen steuern, automatisiert werden.

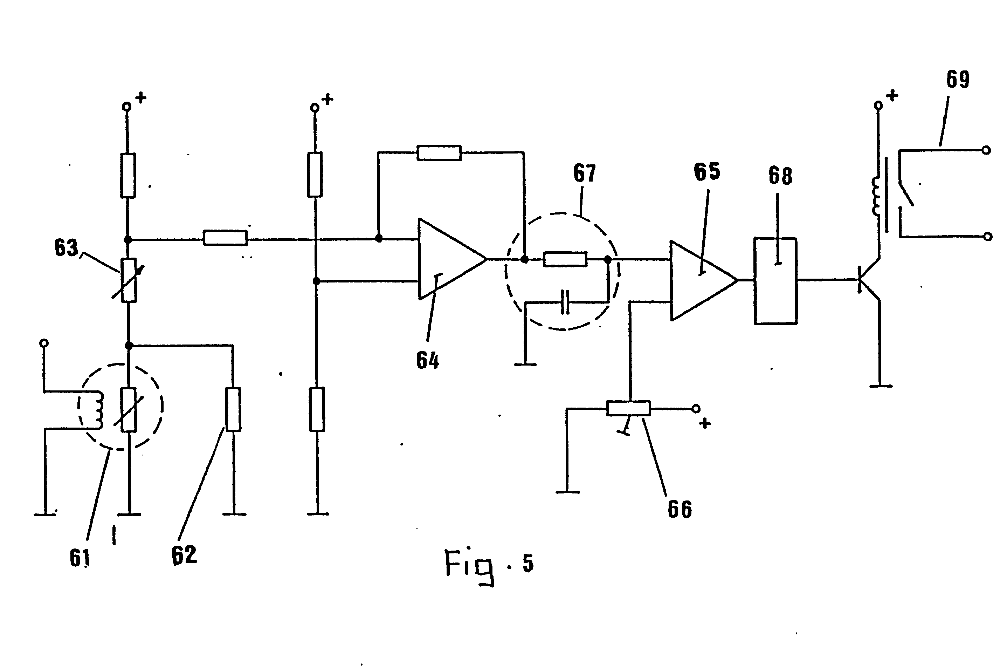

Bei der Ausführung nach Figur 5 ist als Meßglied ein Halbleitersensor 61 vorgesehen, der durch einen Parallelwiderstand 62 überbrückt, um die Auswirkung des steilen Widerstandsanstieges abzubauen.

Eine weitere erfindungsgemäße Maßnahme stellt die für den Autobetrieb erforderliche Temperaturkompensierung des Sensors dar, da dieser zur Erfassung der äußeren Schadstoffe den schwankenden klimatischen Bedingungen zwangsläufig ausgesetzt ist.

Der Sensor weist einen negativen Temperaturkoeffizienten auf, dementsprechend wird erfindungsgemäß in dem Brückenzweig der Figur 5 - in der Reihe zum Sensor 61-ein ausgleichender PTC-Widerstand 63 mit positivem Temperaturkoeffizienten in Reihe geschaltet.

Durch beide Maßnahmen ist es möglich, mit technischen Sensoren, die an sich nur in höheren Konstellationsbereichen einsetzbar sind, ein stabiles Arbeitsverhalten in dem unteren Schadstoffkonzentrationsbereich, der im Straßenverkehr zu erfassen ist, zu erreichen.

Die durch diese beiden erfindungsgemäßen Maßnahmen an sich reduzierte Ansprechempfindlichkeit des Sensors 61 wird durch einen entsprechend nachgeschalteten Entspannungsverstärker 64 kompensiert.

Um ein sachgemäßes Arbeiten der Steuerung 69 zu erreichen, müssen zwei weitere wichtige Forderungen erfüllt sein:

1. Ein Schaltsignal darf erst bei Überschreiten eines bestimmten Schwellenwertes ausgelöst werden;

2. sehr kurzzeitige im Straßenverkehr vorkommende Schadstoffspitzen müssen unterdrückt werden.

Hierzu wird erfindungsgemäß das verstärkte schadstoffproportionale Signal auf einen einstellbaren, elektrischen Schaltkreis (Komparator) 65 geleitet, der bei Überschreiten einer vorwählbaren Spannung 66 ein Schaltsignal auslöst.

Weiterhin ist erfindungsgemäß zwischen Verstärker und Komparator ein integrierender Tiefpaß 67 geschaltet, der Belastungen erst ab einer bestimmten Einwirkungszeit und Größe durchläßt.

Zur Vermeidung zu hoher Schalthäufigkeiten ist die Steuereinheit noch mit einem Zeitglied 68 zur wahlweisen Einstellung einer Mindesteinschaltdauer versehen.

Damit wird verhindert, daß ein ständiges Ein- und Ausschalten des Gerätes durch die im Straßenverkehr vorkommenden stoßweisen, häufigen Belastungen erfolgt.

Die erfaßte Schadstoffmenge kann weiterhin zur optischen Anzeige erfindungsgemäß wahlweise analog, über Leuchtdiodenbänder oder digital gebracht werden.

Durch die Außenanordnung des Sensors 61 zur äußeren Schadstofferfassung wird dieser sehr schnell durch Fremdbeladung inaktiv, und da er durch die normal übliche Beheizung nicht genügend schnell die Belastung austreibt, bleibt der Sensor somit inaktiv.

Um die Ansprechempfindlichkeit tunlichst mit hoher Verfügbarkeit garantiert zu wissen wird erfindungsgemäß vorgeschlagen, jeweils beim Einschalten des Sensors dessen Heizung mit einer Überspannung zu beaufschlagen, um durch die damit höher freiwerdende thermische Leistung das Austreiben der Fremdmoleküle zu beschleunigen.

Erfindungsgemäß wird dieses erreicht, indem im Massezweigstabilisator eine Zenerdiode als eine der möglichen Schaltungsvarianten zwischengeschaltet wird.

Es können auch andere Elemente Anwendung finden, die die gleiche Aufgabenstellung erfüllen.

Im Grunde genommen ist ein elektronischer Baustein da, der nach jedem Einschalten oder in feststellbaren Intervallen die Sensorbeheizung für eine bestimmte Zeitdauer mit höherer Energie betreibt.

In bevorzugter Ausführung entsprechende Figur 6 ist eine Schaltung zur Auslösung des kurzzeitigen Aufheizstoßes nach jedem Einschalten dargestellt, und mit 70 ist ein Stabilisator in seinem Minus-Zweig über eine Zenerdiode 71 nach Masse geschaltet.

Im Normalbetrieb wäre die Ausgangsspannung des Stabilisators um die Zenerspannung erhöht. Nach Ablauf einer Zeitspanne schaltet ein Komparator 73 den Transistor 72 durch das RC-Glied 74, so daß die Zenerdiode überbrückt ist. Damit erreicht die Ausgangsspannung des Stabilisators 70 den Nominalwert.

Die Zeitdauer des Beheizungsstoßes kann durch den Widerstand 75 eingestellt werden.

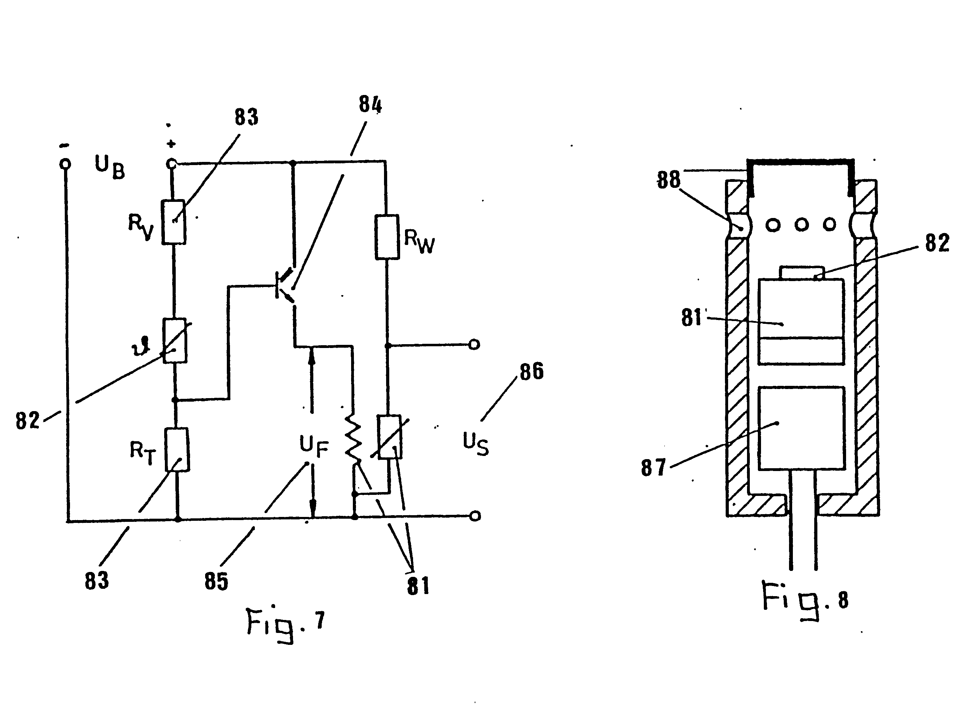

Die Erreichung des erfindungsgemäßen Gedankens einer Konstanthaltung des Temperaturfeldes, in dem der Sensor arbeitet, durch Regelung der Heizleistung sowie auch der Ausgleich der Wärmeabfuhr durch wechselnde Konvektionsbedingungen wird erfindungsgemäß beispielsweise durch eine Schaltung gemäß Figur 7 erreicht.

In Figur 7 ist mit 81 der Sensor, mit 82 der temperaturabhängige Widerstandsfühler am Sensor, mit 83 die Spannungsteilerwiderstände und mit 84 der Transistor bezeichnet, vorzugsweise ein Darlington-Transistor, um die notwendige Verstärkerstufe weitgehend temperaturunabhängig zu gestalten.

Die so erzeugte, entsprechend temperaturproportionale Transistorausgangsspannung Us beheizt den Sensor.

Aus Figur 8 ist das erfindungsgemäß ausgeführte Sensorgehäuse zur Unterbringung des Sensors und gleichzeitigen Aufnahme der die Temperatur- und Konvektionseinflüsse aufnehmenden und verarbeitenden Regelstufe für die Sensorheizung ersichtlich.

Durch die Art der Anordnung berücksichtigt diese Regelstufe gleichzeitig die bereits von der Sensorheizung erzeugte Sensortemperatur.

Figur 8 zeigt die erfindungsgemäße Anordnung in einem gemeinsamen Gehäuse.

Hierbei ist bezeichnet mit 81 wiederum der Sensor, mit 82 der am Sensor angeordnete Temperaturfühler, mit 87 der Verstärker zur Regelung der Sensorheizspannung 85 und mit 88 die Perforation des Gehäuses zur Durchlässigkeit des zu messenden Schadgases.

Es ist bisher bekannt, den Temperatureinfluß durch Temperaturfühler in der Steuerung auszugleichen, wobei bei auftretenden schwankenden Temperaturen der Verstärkungsgrad des Verstärkers geregelt wird.

Im Gegensatz hierzu wird die Temperatur durch Regelung der Sensorheizspannung am Sensor unmittelbar konstant gehalten.

Dies ist besser und weist insbesondere den Vorteil auf, daß hiermit eine für alle Schadgase gleichmäßige Temperaturkompensation erfolgt, da unterschiedliche Schadstoffe unterschiedlich stark von der Temperatur abhängen und man mit einer Verstärkerregelung nur im Höchstfall für einen bestimmten Schadstoff eine Temperaturkompensation erhalten kann.

**Patentansprüche**

1. Ein- und ausschaltbare Filteranlage zur Reinigung von mit Schadstoffen belasteter Luft, welche zum Aufenthalt von Personen dienenden Kraftfahrzeugkabinen zugeführt wird, unter Verwendung eines Chemisorptionsfilters und diesem in Strömungsrichtung der Luft nachgeordneten Katalysatormassen, wobei die zu reinigende Luft vor Eintritt in den Chemisorptionsfilter eine Teilerwärmung und vor Eintritt in die Katalysatormassen eine weitere Erwärmung erfährt, im Anschluß daran rückgekühlt und den Kabinen zugeführt wird, dadurch gekennzeichnet, daß ein Meßglied (5) zum Messen von Schadstoffen in der den Kabinen zugeführten Luft vorgesehen ist, welches vom Luftstrom hinter dem Kühler (1) des Kraftfahrzeuges beaufschlagt ist.

2. Filteranlage nach Anspruch 2, dadurch gekennzeichnet, daß der Luftstrom das Meßglied (5) tangential anströmt.

3. Filteranlage nach Anspruch 1, dadurch gekennzeichnet, daß der Chemisorptionsfilter (22) durch Sensoren (23, 24) gesteuert wird, wobei als erster Sensor (23) das Meßglied zum Messen von Schadstoffen in der den Kabinen zugeführten Luft verwendet wird und ein zweiter Sensor (24) in Strömungsrichtung hinter dem Chemisorptionsfilter (22) angeordnet ist und an eine Zentralanzeige (26) im Bereich des Fahrzeugführers angeschlossen ist.

4. Filteranlage nach Anspruch 1, dadurch gekennzeichnet, daß das Meßglied (5) einen Kraftfahrzeugventilator selbsttätig entsprechend den auftretenden Schadstoffbelastungen aus- bzw. einschaltet.

5. Filteranlage nach Anspruch 1, dadurch gekennzeichnet, daß zur Vermeidung von Schadstoffspitzen in Kraftfahrzeugkabinen eine Umschaltung auf innere Umluft mittels Erfassung der äußeren Schadstoffbelastungen durch das Meßglied (5) erfolgt.

6. Filteranlage nach Anspruch 1, dadurch gekennzeichnet, daß als Meßglied ein Halbleitersensor (61) vorgesehen ist und eine elektrische Stabilisierung für Schadstoffkonzentrationen bis in den Bereich von unter 1 ppm Schadstoffbelastung durchgeführt wird.

7. Filteranlage nach Anspruch 1, dadurch gekennzeichnet, daß zur Konstanthaltung des Temperaturfeldes, in dem das Meßglied arbeitet, die erforderliche Temperaturerfassung unmittelbar am Meßglied (81) erfolgt.

8. Filteranlage nach Anspruch 7, dadurch gekennzeichnet, daß das Meßglied (81) durch Regelung der Heizleistung über die Sensorheizspannung auf konstante Beheizungstemperatur gehalten wird.

9. Filteranlage nach Anspruch 1, dadurch gekennzeichnet, daß das Meßglied (5) einen Vorgang - akustisch bzw. optisch und/oder direkt schalttechnisch - auslöst, der es ermöglicht, daß Fensterheber, Schiebedach und Luftklappen geschlossen werden.

10. Filteranlage nach Anspruch 1, dadurch gekennzeichnet, daß das Meßglied (5) sich im Bereich der Lufthaube (4) hinter dem Kühler (1) vor dem Ventilator (3) befindet.

11. Filteranlage nach Anspruch 10, dadurch gekennzeichnet, daß das Meßglied (5) schräg nach hinten in die Lufthaube (4) hineinragt.

12. Filteranlage nach Anspruch 3, dadurch gekennzeichnet, daß dem Chemisorptionsfilter (32) eine Desorptionsleitung (36) nachgeordnet ist, welche über den zweiten Sensor (24) zu- oder abgeschiebert wird, um bei Bedarf die mit Schadstoffen angereicherte, als Desorptionsluft zu bezeichnende Luftmenge in den Kofferkasten oder nach außerhalb des Fahrzeuges abzuleiten.

13. Filteranlage nach Anspruch 1, dadurch gekennzeichnet, daß die Kennlinie des Meßgliedes (61) im niedrigen Schadstoffbereich durch einen parallel geschalteten Widerstand (62) linearisiert wird.

14. Filteranlage nach Anspruch 1, dadurch gekennzeichnet, daß zur Temperaturkompensation ein PTC-Widerstand (63) mit gleichgroßem jedoch entgegengesetztem Temperaturkoeffizienten in Reihe zum Meßglied (61) in einem Meßbrückenzweig geschaltet ist.

15. Filteranlage nach Anspruch 14, dadurch gekennzeichnet, daß das Meßbrückensignal über einen Verstärker (64) einem Komparator (65) zugeleitet wird, der bei Überschreiten der zulässigen Schadstoffkonzentration einen Wirkstromkreis (69) einschaltet.

16. Filteranlage nach Anspruch 15, dadurch gekennzeichnet, daß die Schaltschwelle des Komparators (65) über einen einstellbaren Spannungsteiler (66) wählbar ist.

17. Filteranlage nach Anspruch 15, dadurch gekennzeichnet, daß zur Unterdrückung von kleinen Schadstoffimpulsen ein integrierender Tiefpaß (67) zwischen Verstärker (64) und Komparator (65) angeordnet ist.

18. Filteranlage nach Anspruch 1, dadurch gekennzeichnet, daß die Beheizung des Meßgliedes (5) in periodischen Abständen und/oder bei jedem Einschalten für eine bestimmte Zeit mit erhöhter Leistung betrieben wird.

19. Filteranlage nach Anspruch 1, dadurch gekennzeichnet, daß das Meßglied und die dazu erforderliche Verstärker- und Regelstufe (87) zur Erzeugung der geregelten Heizspannung in einem gemeinsamen Gehäuse untergebracht sind.

20. Filteranlage nach Anspruch 19, dadurch gekennzeichnet, daß das Gehäuse im Bereich des Meßgliedes (81) perforiert ist.

**Claims**

1. Filtering system for an on-and-off switching facility, for cleaning polluted air fed to motor vehicle cabins which serve to accommodate persons, employing a chemical adsorption filler and catalyst bodies disposed downstream thereof in the direction of airflow, the air to be cleaned, prior to entering the chemical adsorption filter, undergoing partial heating and further heating prior to entering the catalyst bodies, whereupon it is recooled and fed to the cabins, characterised in that a measuring device (5) is provided for measuring pollutants in the air fed to the cabins exposed to the air stream behind the rediator (1) of the motor vehicle.

2. Filter system according to Claim 2 (sic!), characterised in that the air stream flows tengentially onto the measuring device (5).

3. Filter system according to Claim 1, characterised in that the chemical adsorption filter (22) is controlled by sensors (23, 24), the device for measuring pollutants in the air fed to the cabins being used as the first sensor (23) while a second sensor (24) is disposed behind the chemical adsorption filter (22), viewed in the direction of flow and is connected to a central display (26) near the vehicle driver.

4. Filter system according to Claim 1, charecterised in that the measuring device (5) switches a vehicle fan off end on automatically in accordance with the levels of pollutant which occur.

5. Filter system according to Claim 1, characterised in that to avoid peaks of pollutants in the vehicle cabins, detection of the external pollutant levels by the measuring device (5) effects switchover to internal circulating air.

6. Filter system according to Claim 1, characterised in that a semi-conductor sensor (61) is provided as the measuring device, electrical stabilisation taking place for pollutant concentrations down to the range of less than 1 ppm pollutant level.

7. Filter system according to Claim 1, characterised in that to maintain constant the temperature field in which the measuring device works, the necessary detection of temperature occurs directly at the measuring device (81).

8. Filter system according Claim 7, characterised in that the measuring device (81) is maintained at a constant heating temperature by regulation of the heat output via the sensor heating voltage.

9. Filter system according to Claim 1, characterised in that the measuring device (5) triggers a process acoustically or optically and/or by a direct switching operation - which makes it possible to close window cranks, sliding roofs and air vents.

10. Filter system according to Claim 1, characterised in that the measuring device (5) is disposed in that area of the bonnet (4) which is behind the radiator (1) and in front of the fan (3).

11. Filter system according to Claim 10, characterised in that the measuring device (5) projects obliquely rearwardly into the bonnet (4).

12. Filter system according to Claim 3, characterised in that downstream of the chemical adsorption filter (32) is a desorption line (36) which is opened up or shut off by a gate valve operated by the second sensor (24) so that when necessary the volume of air enriched with pollutants end described as desorption air can be discharged outside the vehicle or into the boot space.

13. Filter system according to Claim 1, characterised in that the characteristic curve of the measuring device (61) is linearised in the low pollutant range by a parallel-connected resistor (62).

14. Filter system according to Claim 1, characterised in that for temperature compensation, a PTC resistor (63) with an equal but opposite temperature coefficient is connected in series with the measuring device (61) in a measuring bridge branch.

15. Filter system according to Claim 14, characterised in that the measuring bridge signal is fed through an amplifier (64) to a comparator (65) which, when the admissible cocentration of pollutants is exceeded, switches on an active current circuit (69).

16. Filter system according to Claim 15, characterised in that the switching threshold of the comperator (65) is selectable by an adjustable potential divider (66).

17. Filter system according to Claim 15, characterised in that to suppress small pollutant pulses, an integrating low pass filter (67) is disposed between amplifier (64) and comparator (65).

18. Filter system according to Claim 1, characterised in that the heating of the measuring device (5) is operated at increased output for a definite time et periodic intervals end/or every switch-on.

19. Filter system according to Claim 1, charecterised in that the measuring device end the amplifier and regulating stage (87) required for the purpose of generating the regulated heating voltage are accommodated in one common housing.

20. Filter system according to Claim 19, characterised in that the housing is perforated in the region of the measuring device (81).

**Revendications**

1. Installation de filtrage enclenchable et déclenchable pour l'épuration de l'air chargé d'éléments polluants qui est amené à des habitacles de vénicules automobiles servant de séjour à des personnes, avec emploi d'un filtre à sorption chimique et de matières catalytiques placées en aval de celui-ci dans le sens de l'écoulement de l'air, l'air à épurer subissant un chauffage partiel avant son entrée dans le filtre à sorption chimique et un autre chauffage avant son entrée dans les matières catalytiques, puis étant refroidi et conduit aux habitacles, caractérisée par le fait que pour mesurer les éléments polluants contenus dans l'air amené aux habitacles, il est prévu un organe de mesure (5) qui reçoit le courant d'air derriére le radiateur (1) du véhicule automobile.

2. Installation de filtrage selon la revendication 2, caractérisée par le fait que le courant d'air s'écoule tangentiellement le long de l'organe de mesure (5).

3. Installation de filtrage selon la revendication 1, caractérisée par le fait que le filtre à sorption chimique (22) est commandé par des capteurs (23, 24), l'organe de mesure, servant à mesurer les éléments polluants contenus dans l'air amené aux habitacles étant utilisé comme premier capteur (23), et un second capteur (24) étant installé derrière le filtre de sorption chimique (22) dans le sens de l'écoulement et étant relié à un affichage central (26) dans la zone du conducteur du véhicule.

4. Installation de filtrage selon la revendication 1, caractérisée par le fait que l'organe de mesure (5) déclenche et enclenche automatiquement un ventilateur du véhicule en fonction des charges polluantes intervenant.

5. Installation de filtrage selon la revendication 1, caractérisée par le fait que pour éviter des surcharges d'éléments polluants dans les habitacles des véhicules automobiles, une commutation sur le circuit de circulation d'air interne est effectuée à partir d'une détection des charges polluantes externes par l'organe de mesure (5).

6. Installation de filtrage selon la revendication 1, caractérisée par le fait qu'on prévoit un capteur à semi-conducteur (61) comme organe de mesure et qu'on effectue une stabilisation électrique pour des concentrations d'éléments polluants jusque dans la zone d'une charge polluante inférieure à 1 ppm.

7. Installation de filtrage selon la revendication 1, caractérisée par le fait que pour maintenir constante la plage des températures dans laquelle travaille l'organe de mesure, la détermination de la température nécessaire s'effectue directement au niveau de l'organe de mesure (81).

8. Installation de filtrage selon la revendication 7, caractérisée par le fait que l'on maintient l'organe de mesure (81) à température de chauffage constante par réglage de la puissance de chauffage au moyen de la tension de chauffage des capteurs.

9. Installation de filtrage selon la revendication 1, caractérisée par le fait que l'organe de mesure (5) déclenche un processus -acoustiquement, optiquement et/ou directement par une technique de commutation- qui permet que les glaces, le toit ouvrant et les volets d'aération soient fermés.

10. Installation de filtrage selon la revendication 1, caractérisée par le fait que l'organe de mesure (5) se trouve dans la zone du capot d'entrée d'air (4) derrière le radiateur (1) devant le ventilateur (3).

11. Installation de filtrage selon la revendication 10, caractérisée par le fait que l'organe de mesure (5) fait saillie obliquement vers l'arrière dans le capot d'entrée d'air (4).

12. Installation de filtrage selon la revendication 3, caractérisée par le fait que derrière le filtre à sorption chimique (32) est installée une conduite de désorption (36) qui est fermée ou ouverte par une valve au moyen du second capteur (24) pour, en cas de besoin, évacuer dans la caisse du coffre ou à l'extérieur du véhicule, la quantité d'air enrichie d'éléments polluants et désignée en tant qu'air de désorption.

13. Installation de filtrage selon la revendication 1, caractérisée par le fait que la courbe caractéristique de l'organe de mesure (61) dans la zone des faibles valéurs en éléments polluants est linéarisée par une résistance (62) montée en parallèle.

14. Installation de filtrage selon la revendication 1, caractérisée par le fait que pour la compensation des températures, une thermistance (63) à coefficient de température d'égale valeur mais opposé, est montée en série avec l'organe de mesure (61) dans une branche d'un pont de mesure.

15. Installation de filtrage selon la revendication 14, caractérisée par le fait que le signal du pont de mesure est appliqué par l'intermédiaire d'un amplificateur (64) à un comparateur (65) qui enclenche un circuit de courant actif (69) en cas de dépassement de la concentration admissible en éléments polluants.

16. Installation de filtrage selon la revendication 15, caractérisée par le fait que le seuil de commutation du comparateur (65) est sélectionné par un diviseur de tension réglable (66).

17. Installation de filtrage selon la revendication 15, caractérisée par le fait que pour la suppression des petites impulsions d'éléments polluants, un filtre passe-bat (67) à action par intégration est interposé entre l'amplificateur (64) et le comparateur (65).

18. Installation de filtrage selon la revendication 1, caractérisée par le fait que le chauffage de l'organe de mesure (5) s'effectue à des intervalles périodiques et/ou pour un temps déterminé avec puissance accrue à chaque enclenchement.

15. Installation de filtrage selon la revendication 1, caractérisée par le fait que l'organe de mesure et l'étage amplificateur et régulateur (87), nécessaire à cet effet pour produire la tension de chauffage réglée, sont logés dans un boîtier commun.

20. Installation de filtrage selon la revendication 19, caractérisée par le fait que le boîtier est perforé dans la zone de l'organe de mesure (81).

Fig.1

0 160 010

Fig. 2

Fig. 3

0 160 010

Fig. 4

34

31

32

33

35

36

34

33

35

32

36

0 160 010

Fig. 5

63 61 62 64 67 65 68 69 66

0 160 010

Fig. 6

0 160 010

Fig. 8

Fig. 7